# EUROPEAN PATENT APPLICATION

(11) **EP 1 905 381 A1**
(43) Date of publication of application: **02.04.2008**
(21) Application number: 07018960.0
(22) Date of filing: 26.09.2007
(51) Int. Cl.: A61C 13/12

(54) **Holder of abutment tooth model**

(30) Priority: 29.09.2006 JP 2006269309
(71) Applicant: GC Corporation, Tokyo 174-8585 (JP)
(72) Inventor: Doumoto, Tatsuru, Tokyo 174-8585 (JP); Kuroda, Tomohiko, Tokyo 174-8585 (JP); Nakao, Yu, Tokyo 174-8585 (JP)
(74) Representative: Müller-Boré & Partner Patentanwälte

(57) **Abstract**

An objective of the present invention is to provide a holder of an abutment tooth model to surely and accurately set a model of an abutment tooth on a three-dimensional coordinates measuring apparatus when measuring an outer face shape of the abutment tooth model by the three-dimensional coordinates measuring apparatus, where the holder of an abutment tooth model can easily hold an abutment tooth model, and can easily adjust and confirm an accurate position of the abutment tooth model. The holder includes an abutment tooth model holding base 1 and a cylindrical body 2. The abutment tooth model holding base 1 is formed in a pillar shape, has a concave part at the upper side thereof and a holding hole provided at a center of an end face of the lower side thereof for inserting a supporting shaft which projects at a center of a rotating part of a three-dimensional coordinates measuring apparatus, and can attachable/detachable hold the residual ridge side of an abutment tooth model by adhesion with a sticky material built on a bottom face in the concave part thereof. The cylindrical body 2 is formed in a cylindrical shape, and has a lower side thereof having a slightly larger inner diameter than an outer diameter of the abutment tooth model holding base 1 and being externally fitted to the abutment tooth model holding base, a stepped part, which contacts to a part or the whole of upper face of the abutment tooth model holding base 1, and an upper side from the stepped part having a smaller inner diameter than that of the lower side thereof.

## Description

The present invention relates to a holder of an abutment tooth model to surely and accurately set an abutment tooth model at a three-dimensional coordinates measuring apparatus when an outer face shape of the abutment tooth model is measured by the three-dimensional coordinates measuring apparatus. The holder of an abutment tooth model can easily hold an abutment tooth model, and can easily adjust and confirm an accurate position of the abutment tooth model.

As a method to produce a dental prosthesis having high quality in a short time without using a handwork by a dental technician, a dental CAD/CAM system has been developed, and this system is to produce a dental prosthesis by milling a block for dental prosthesis using an automatic milling machine based on three dimensional shape design data of a dental prosthesis such as a crown or a bridge.

When a dental prosthesis such as a crown or a bridge, which covers an abutment tooth, is produced using such the system, it is necessary to accurately grasp an outer face shape of the abutment tooth and accurately process an inner face of the dental prosthesis. Thus, a process to accurately measure the outer face shape of a previously produced abutment tooth model by a three-dimensional coordinates measuring apparatus is remarkably important. In this process, three-dimensional shape data of the abutment tooth model is approximate-automatically measured. However, since an abutment tooth has various shapes, a process to set the abutment tooth model at a measuring part of the three-dimensional coordinates measuring apparatus is carried out by a handwork. Therefore, there is a remarkable problem how to easily and accurately set an abutment tooth model at a measuring part of a three-dimensional coordinates measuring apparatus by a handwork.

As a holder of an abutment tooth model mounted on a three-dimensional coordinates measuring apparatus, for example, Unexamined Japanese Patent Publication No. 2006-136729 discloses a holder including a housing part for a tooth model and a shaft coupled with the housing part in order to attach the holder to a holding body of the measuring apparatus, the shaft includes a coupling part, the coupling part has a taper part to couple the holder and the holding body by friction lock, and the housing part, the shaft, and the coupling part have a substantially same axis of rotation. As illustrated in Fig. 1A (a represented figure) in the above-described patent publication, this holder is used by filling a moldable compound in the housing part (a container) in order to fix and position a tooth model. Generally in such a holder, a lower end of a margin line of a tooth model is positioned at an upper end face of the housing part so as to adjust a position of the tooth model in the height direction. Thus, in the holder of the above-described patent publication, since a residual ridge side of the tooth model is hidden in the housing part, a dental technician must adjust the position of the tooth model in a horizontal direction by picking up an upper part of the tooth than the margin line. Thus, it is hard to accurately adjust the position. Particularly, when a tooth model is small, such as an abutment tooth model made by milling a tooth, there is a problem that adjusting of the position in the horizontal direction is more difficult.

The present invention is to solve the above-described problems, and a primary objective of the present invention is to provide a holder of an abutment tooth model for surely and accurately setting an abutment tooth model on a three-dimensional coordinates measuring apparatus when measuring an outer face shape of the abutment tooth model by the three-dimensional coordinates measuring apparatus, where the holder of an abutment tooth model can easily hold an abutment tooth model, and can easily adjust and confirm an accurate position of the abutment tooth model.

Present inventors carried out earnest work to solve the above-described problems, as a result of this, found out a following holder to complete the present invention. The holder of an abutment tooth model includes an abutment tooth model holding base and a cylindrical body. The abutment tooth model holding base is formed in a pillar shape, has a concave part at the upper side thereof and a holding hole provided at a center of an end face of the lower side thereof for inserting a supporting shaft which projects at a center of a rotating part of a three-dimensional coordinates measuring apparatus, and can attachable/detachable hold the residual ridge side of an abutment tooth model by adhesion with a sticky material built on a bottom face in the concave part thereof. The cylindrical body is formed in a cylindrical shape and has a lower side thereof having a slightly larger inner diameter than an outer diameter of the abutment tooth model holding base and being externally fitted to the abutment tooth model holding base, a stepped part, which contacts to a part or the whole of an upper face of the abutment tooth model holding base, and an upper side from the stepped part having a smaller inner diameter than that of the lower side thereof. By having the above-described structure, the holder can easily hold an abutment tooth model with a sticky material built on a bottom face of a concave part of an abutment tooth model holding base. Further, the holder can surely and accurately set an abutment tooth model on a three-dimensional coordinates measuring apparatus while holding the abutment tooth model by the holding hole provided at a center of an end face of a lower side of the abutment tooth model holding base. Further, the position of the abutment tooth model in the height direction can be confirmed by externally fitting the cylindrical body to the abutment tooth model holding base and confirming that a lower end of a margin line of the abutment tooth model is positioned at slightly upper side than an upper end face of the cylindrical body. Furthermore, since the residual ridge side of the abutment tooth model is exposed by removing the cylindrical body, the abutment tooth model can be easily moved, and thus positions of the abutment tooth model in the height direction and the horizontal direction can be easily adjusted.

That is, the present invention is a holder of an abutment tooth model, including:
an abutment tooth model holding base, which is formed in a pillar shape, has a concave part at the upper side thereof and a holding hole provided at a center of an end face of the lower side thereof for inserting a supporting shaft projecting at a center of a rotating part of a three-dimensional coordinates measuring apparatus, and can attachable/detachable hold the residual ridge side of an abutment tooth model with a sticky material built on a bottom face in the concave part thereof; and
a cylindrical body, which is formed in a cylindrical shape with a lower side thereof having a slightly larger inner diameter than an outer diameter of the abutment tooth model holding base and being externally fitted to the abutment tooth model holding base, a stepped part which contacts to a part or the whole of an upper face of the abutment tooth model holding base, and an upper side from the stepped part having a smaller inner diameter than that of the lower side thereof.

Further, the present inventors found out the followings. When the cylindrical body has projecting parts, each having an approximate-triangular cross section, at every 90° positions on an inner peripheral face of an end part at the upper side thereof, a crossing point between lines respectively connecting opposite projecting parts among the four projecting parts is a center of the holder, the crossing point can be used as a standard point of a position for setting an abutment toothmodel, and thereby the position of the abutment tooth model in the horizontal direction can be easily confirmed. Therefore, such a structure is preferable. Further, when the holding hole is formed as a circular hole, and the abutment tooth model holding base further includes a screw hole provided from a side of the abutment tooth model holding base toward the holding hole, and includes a locking screw screwed into the screw hole to lock a supporting shaft, which is inserted into the holding hole and projects at the center of a rotating part of a three-dimensional coordinates measuring apparatus, or when the holding hole is formed as a circular hole, and the abutment tooth model holding base further includes a locking hole, in which a locking shaft projecting at the rotating part of the three-dimensional coordinates measuring apparatus in parallel with the supporting shaft is inserted, on the end face at the lower side of the abutment tooth model holding base, the abutment tooth model holding base does not idle at the time of the rotating part of a three-dimensional coordinates measuring apparatus being rotated in order to measure an external face shape of an abutment tooth model, and thereby the shape can be accurately measured. Therefore, such a structure it is preferable. Further, when the abutment tooth holding base includes a hole part, in which a dowel pin inserted into the residual ridge side of an abutment tooth model is inserted, on the bottom face in the concave part thereof, there is no problem that the abutment tooth model holding base cannot hold abutment tooth model because the dowel pin contacts to the bottom face in the concave part thereof, even in the case of an abutment tooth model with a dowel pin inserted therein. Therefore, such a structure is preferable. Furthermore, when the abutment tooth model holding base includes cutout parts, which have a width capable of inserting a finger, and are provided at the side part of the concave part thereof along the peripheral direction at equal intervals in parallel with the axis line of the abutment tooth model holding base, the finger can be inserted into the concave part of the abutment tooth model holding base, and thereby the position of an abutment tooth model can be more accurately adjusted. Therefore, such a structure is preferable.

The holder of an abutment tooth model according to the present invention includes an abutment tooth model holding base, which is formed in a pillar shape, has a concave part at the upper side thereof, and a holding hole provided bored at a center of an end face of the lower side thereof for inserting a supporting shaft projecting at a center of a rotating part of a three-dimensional coordinates measuring apparatus, and can attachable/detachable hold the residual ridge side of an abutment tooth model by adhesion with a sticky material built on a bottom face in the concave part thereof, and a cylindrical body, which is formed in a cylindrical shape with a lower side thereof having a slightly larger inner diameter than an outer diameter of the abutment tooth model holding base and being externally fitted to the abutment tooth model holding base, a stepped part, which contacts to a part or the whole of an upper face of the abutment tooth model holding base, and an upper side from the stepped part having a smaller inner diameter than that of the lower side thereof. By having the above-described structure, the holder can easily hold an abutment tooth model with a sticky material built on a bottom face of a concave part of an abutment tooth model holding base. The holder can surely and accurately set an abutment tooth model on a three-dimensional coordinates measuring apparatus by holding the abutment tooth model using the holding hole provided at a center of an end face of a lower side of the abutment tooth model holding base. Further, the position of the abutment tooth model in the height direction can be confirmed by externally fitting the cylindrical body to the abutment tooth model holding base and then confirming that a lower end of a margin line of the abutment tooth model is positioned at the slightly upper side than an upper end face of the cylindrical body. Furthermore, since the residual ridge side of the abutment tooth model is exposed by removing the cylindrical body, the abutment tooth model can be easily moved, and thus positions of the abutment tooth model in the height direction and the horizontal direction can be easily adjusted. In addition, even when an operation is hard after the holder is mounted on a three-dimensional coordinates apparatus, the position of an abutment tooth model can be easily adjusted by only removing the cylindrical body.

Further, the cylindrical body has projecting parts, each having an approximate-triangular cross section, at every 90° positions on an inner peripheral face of an end part at the upper side thereof. Accordingly, a crossing point between lines respectively connecting opposite projecting parts among the four projected parts is a center of the holder, the crossing point can be used as a standard point of a position for setting an abutment tooth model, and the position of the abutment tooth in the horizontal direction can be thereby easily confirmed. Further, the holding hole is formed as a circular hole, and the abutment tooth model holding base further includes a screw hole provided from a side of the abutment tooth model holding base toward the holding hole, and includes a locking screw screwed into the screw hole to lock a supporting shaft, which is inserted into the holding hole and projects at the center of a rotating part of a three-dimensional coordinates measuring apparatus. Further, the holding hole is formed as a circular hole, and the abutment tooth model holding base further includes a locking hole, in which a locking shaft projecting at the rotating part of the three-dimensional coordinates measuring apparatus in parallel with the supporting shaft is inserted, on the end face at the lower side of the abutment tooth model holding base. Accordingly, the abutment tooth model holding base does not idle, at the time of the rotating part of a three-dimensional coordinates measuring apparatus being rotated in order to measure an external face shape of an abutment tooth model, and the shape can be thereby accurately measured. Further, the abutment tooth holding base includes a hole part, in which a dowel pin inserted into the residual ridge side of an abutment tooth model is inserted, on the bottom face in the concave part thereof. Accordingly, there is no problem that the abutment tooth model holding base cannot hold abutment tooth model because the dowel pin contacts to the bottom face in the concave part thereof, even in the case of an abutment tooth model with a dowel pin inserted therein. Furthermore, the abutment tooth model holding base includes cutout parts, which have a width capable of inserting a finger, and are provided at the side part of the concave part thereof along the peripheral direction at equal intervals so as to be in parallel with the axis line of the abutment tooth model holding base. Accordingly, a finger can be inserted into the concave part of the abutment tooth model holding base, and thereby the position of an abutment tooth model can be more accurately adjusted.
Fig. 1 is a front view to illustrate the state that an example of a holder of an abutment tooth model according to the present invention holds an abutment tooth model.
Fig. 2 is a front view to illustrate the state that a cylindrical body is removed from a holder of an abutment tooth model of Fig. 1.
Fig. 3 is a bottom view of an abutment tooth model holding base of Fig. 2.
Fig. 4 is a cross sectional view taken along the line A-A in Fig. 2 in the state that an abutment tooth model and a sticky material are removed from an abutment tooth model holding base.
Fig. 5 is a perspective explanation view of a cylindrical body.
Fig. 6 is a plan view of Fig. 1.
Fig. 7 is a perspective explanation view to illustrate the state that a holder of an abutment tooth model is mounted on a three-dimensional coordinates measuring apparatus.
Fig. 8 is a front view to illustrate another example of an abutment tooth model holding base according to the present invention.
Fig. 9 is a bottom view of an abutment tooth model holding base of Fig. 8.
Fig. 10 is a cross sectional view taken along the line B-B in Fig. 9.

A holder of an abutment tooth model according to the present invention will be described in detail below with reference to the drawings.

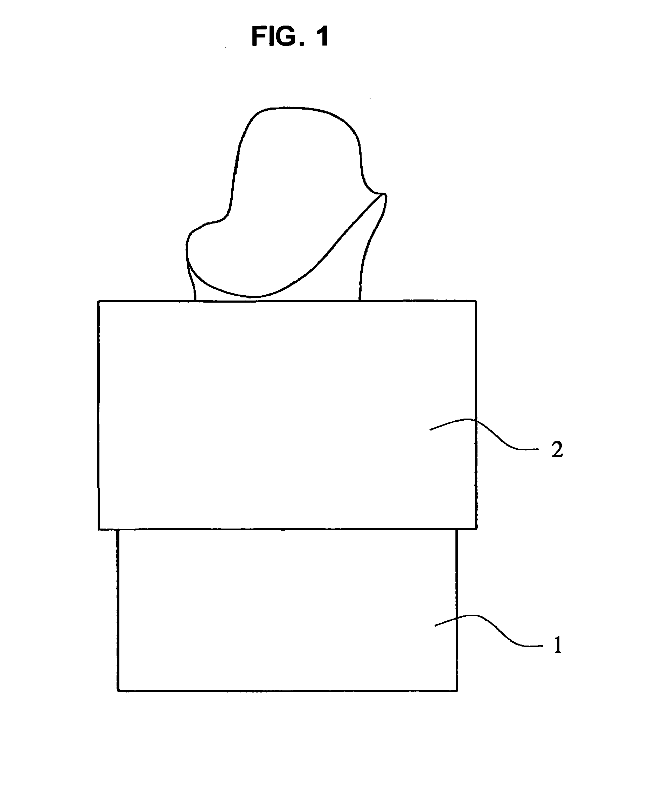

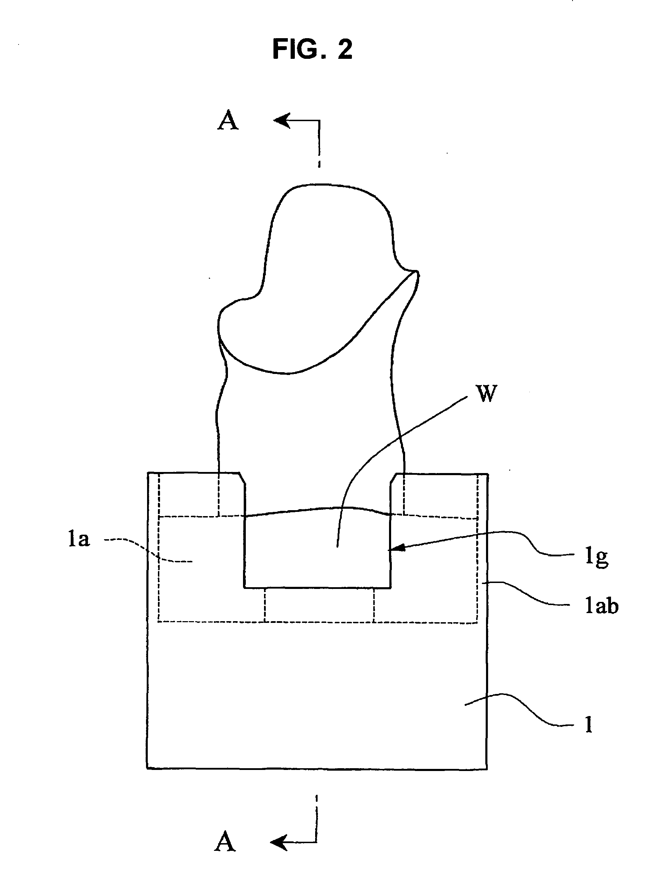

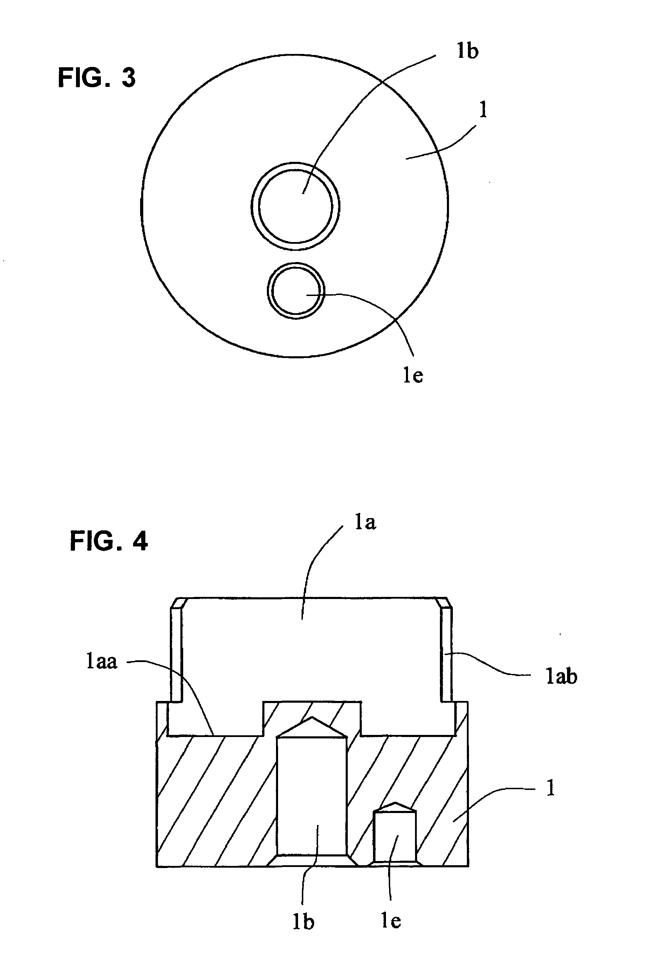

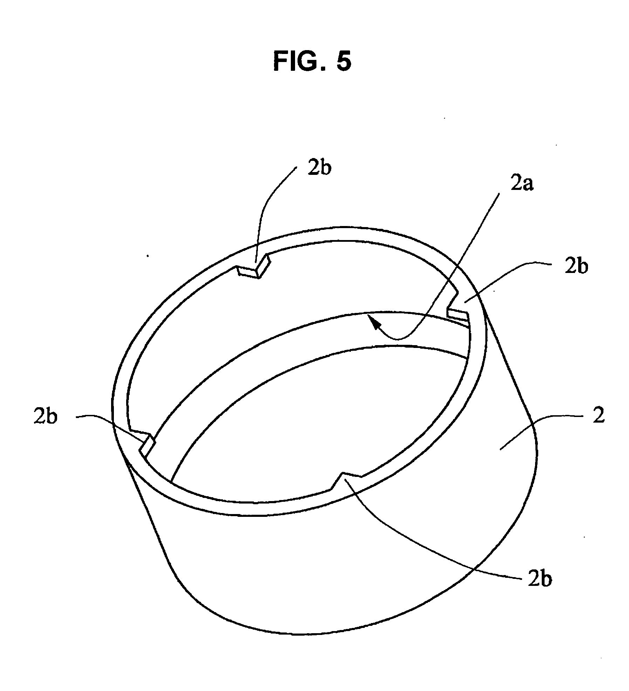

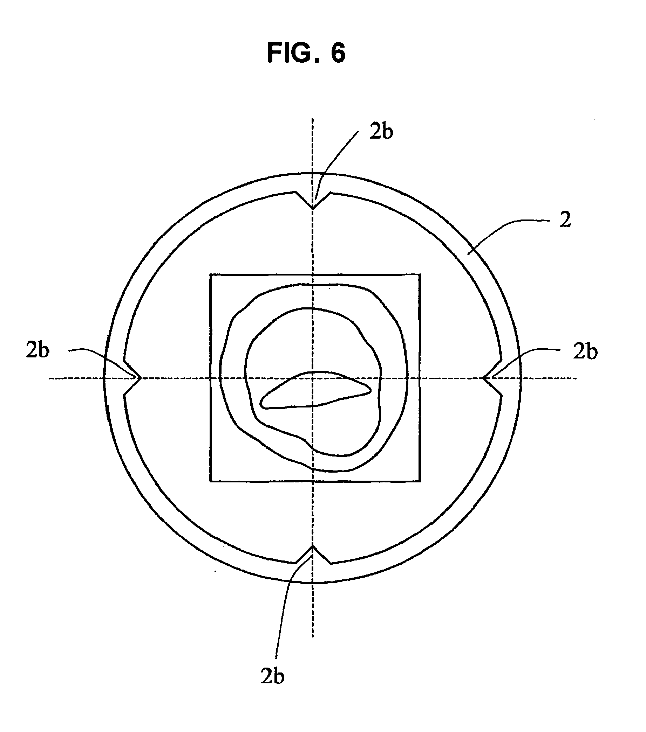

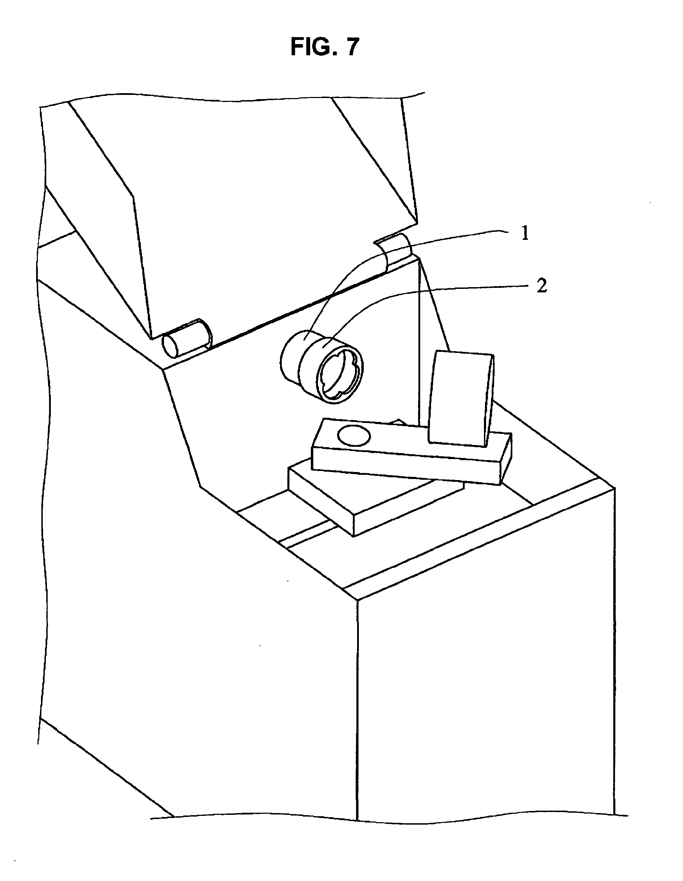

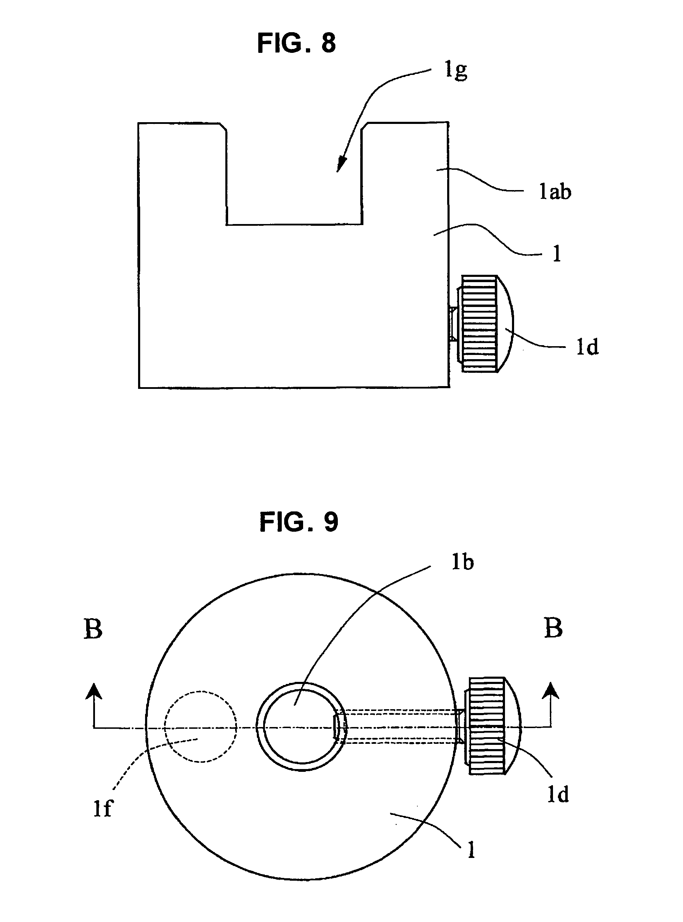

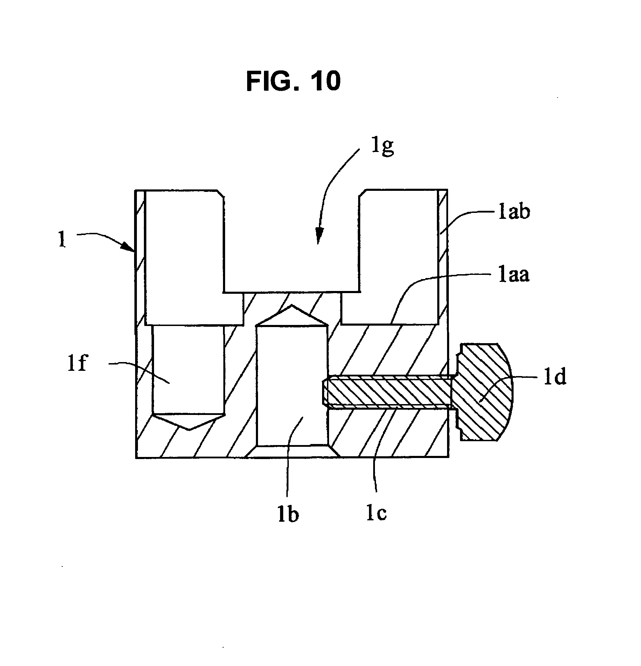

Fig. 1 is a front view to illustrate the state that an example of a holder of an abutment tooth model according to the present invention holds an abutment tooth model. Fig. 2 is a front view to illustrate the state that a cylindrical body is removed from a holder of an abutment tooth model of Fig. 1. Fig. 3 is a bottom view of an abutment tooth model holding base of Fig. 2. Fig. 4 is a cross sectional view taken along the line A-A in Fig. 2 in the state that an abutment tooth model and a sticky material are removed from an abutment tooth model holding base. Fig. 5 is a perspective explanation view of a cylindrical body. Fig. 6 is a plan view of Fig. 1. Fig. 7 is a perspective explanation view to illustrate the state that a holder of an abutment tooth model is mounted on a three-dimensional coordinates measuring apparatus. Fig. 8 is a front view to illustrate another example of an abutment tooth model holding base according to the present invention. Fig. 9 is a bottom view of an abutment tooth model holding base of Fig. 8. Fig. 10 is a cross sectional view taken along the line B-B in Fig. 9.

An abutment tooth model holding base 1 is formed in a pillar shape, has a concave part 1a formed on the upper side thereof, and a holding hole 1b provided at a center of an end face at the lower side thereof for inserting a supporting shaft which projects at a center of a rotating part of a three-dimensional coordinates measuring apparatus. Further, the abutment tooth model holding base 1 can attachable/detachable hold the residual ridge side of an abutment tooth model with an undermentioned sticky material W built on a bottom face 1aa in the concave part 1a. In order to accurately measure an external surface shape of an abutment tooth model, the abutment tooth model holding base 1 to hold the abutment tooth model is required to have high rigidity. Also, easily processing of the concave part 1a and the holding hole 1b is required. Thus, the abutment tooth model holding base 1 can be made by processing a pillar shaped aluminum.

Further, when the holding hole 1b of the abutment tooth model holding base 1 is a circular hole and cannot keep a sufficient locking state by only inserting a supporting shaft projecting at the center of a rotating part of a three-dimensional coordinates measuring apparatus, the abutment tooth model holding base preferably further includes a screw hole 1c provided from a side of the abutment tooth model holding base 1 toward the holding hole 1b, and a locking screw 1d to lock the supporting shaft projecting at the center of a rotating part of a three-dimensional coordinates measuring apparatus, or the abutment tooth model holding base 1 preferably further includes a locking hole 1e, in which a locking shaft projecting at the rotating part of a three-dimensional coordinates measuring apparatus in parallel with the supporting shaft is inserted, on the end face at the lower side of the abutment toot model holding base 1, so that the abutment tooth model holding base does not idle at the time of the rotating part of a three-dimensional coordinate measuring apparatus being rotated and accurate measuring can be done.

In the case that an abutment tooth model is for a front tooth and has a dowel pin inserted therein with inclination, the abutment tooth model holding base 1 preferably further includes a hole part 1f, in which the dowel pin is inserted, on the bottom face 1aa in the concave part 1a of the abutment tooth model holding base 1, so that there occurs no problem that the abutment tooth model holding base 1 cannot hold the abutment tooth model for a front tooth because the dowel pin contacts to the bottom face 1aa in the concave part 1a. Further, the abutment tooth model holding base 1 preferably further includes cutout parts 1g, which have a width capable of inserting a finger, and provided at a side part 1ab of the concave part 1a thereof along the peripheral direction at equal intervals in parallel with the axis line of the abutment tooth model holding base 1, so that the finger can be inserted into the concave part 1a of the abutment tooth model holding base 1 and thus, the position of an abutment tooth model can be adjusted more accurately.

A cylindrical body 2 is formed in a cylindrical shape with a lower side thereof having a slightly larger inner diameter than an outer diameter of the abutment tooth model holding base 1 and being externally fitted to the abutment tooth model holding base 1, a stepped part 2a, which contacts to a part or the whole of an upper face of the abutment tooth model holding base 1, and an upper side from the stepped part 2a having a smaller inner diameter than that of the lower side thereof. The cylindrical body 2 is used to confirm the position of an abutment tooth model in the height direction, that is, to confirm that a margin line of an abutment tooth model is positioned at slightly upper side than an upper end face of the cylindrical body 2. When the position of an abutment tooth model is adjusted, the cylindrical body 2 is removed so as not to disturb the adjustment. Therefore, since the cylindrical body 2 is not to hold an abutment tooth model, the cylindrical body 2 may be externally fitted to or removed from the abutment tooth model holding base 1 when an external surface shape of an abutment tooth model is measured by a three-dimensional coordinates measuring apparatus. Further, since the cylindrical body 2 is not required to have high rigidity, a material of the cylindrical body 2 is not necessarily similar to that of the abutment tooth model holding base 1. For example, the cylindrical body 2 can be formed by a synthetic resin.

Further, the cylindrical body 2 preferably further includes projecting parts 2b having a triangular cross section at every 90° positions on an inner peripheral face of an end part at the upper side thereof. Since a crossing point between lines respectively connecting opposite projecting parts 2b among the four projecting parts 2b is a center of a holder as illustrated in Fig. 6, and thus the crossing point can be used as a standard point to provide an abutment tooth model, the position of the abutment tooth model in the horizontal direction can be easily confirmed.

A sticky material W is built on the bottom face 1aa in the concave part 1a of the abutment tooth model holding base 1. The sticky material W can be any material if it is non-toxic and does not have fluidity. For example, the sticky material W is preferably a brazing filler metal used for a holding plate of an artificial tooth.

In order to hold an abutment tooth model with the holder of an abutment tooth model according to the present invention, the sticky material W is built on the bottom face 1aa in the concave part 1a formed at the upper side of the abutment tooth model holding base 1 in the state of removing the cylindrical body 2, and the residual ridge side of an abutment tooth model is embedded into or contacted with the sticky material W so as to be held by adhesion. Further, when an abutment tooth model is for a front tooth and a dowel pin is inserted therein with inclination, the abutment tooth model holding base 1 having the hole part 1f as illustrated in Figs. 9 and 10 is used, and the abutment tooth model is set so as to insert the dowel pin into the hole part 1f.

In case of adjusting the position of an abutment tooth model held by a holder of an abutment tooth model in the height direction, the cylindrical body 2 is externally fitted to the abutment tooth model holding base 1, and whether a lower end of a margin line of the abutment tooth model is positioned at slightly upper side than an upper end face of the cylindrical body 2 or not is observed as illustrated in Fig. 1 in order to confirm the position of the abutment tooth model in the height direction. At this time, when the lower end of a margin line of the abutment tooth model is positioned at the largely upper side than the upper end face of the cylindrical body 2, the abutment tooth model may be pushed and further embedded into the sticky material W. On the contrary, when the lower end of a margin line of the abutment tooth model is positioned at the lower side than the upper end face of the cylindrical body 2, the abutment tooth model may be upwardly moved by gathering the sticky material W on the bottom face 1aa in the concave part 1a to the center part from the side part so as to build up the sticky material W higher, after removing the cylindrical body 2, as illustrated in Fig. 2. Particularly, when the abutment tooth model holding base 1 includes the cutout part 1g at the side part 1ab of the concave part 1a as illustrated in Fig. 2, fingers may be inserted from the cutout part 1g so as to gather the sticky material W to the center part.

In case of adjusting the position of an abutment tooth model in the horizontal direction, whether the abutment tooth model is positioned at the center part or not is confirmed by seeing it from the upper direction of the holder so as to confirm the position of the abutment tooth model in the horizontal direction. At this time, since the abutment tooth model holding base 1 and the cylindrical body 2 are formed in a circular shape, it is enough to confirm whether the abutment tooth model is positioned at the center of the circle. Thus, the cylindrical body 2 is not necessarily externally fitted to the abutment tooth model holding base 1. However, when the cylindrical body 2 has projecting parts 2b having an approximate-triangular cross section for every 90° on an inner peripheral face of an end part on the upper side thereof as illustrated in Fig. 5, the cylindrical body 2 is externally fitted to the abutment tooth model holding base 1, and top points of the opposite projecting parts 2b among the four projecting parts may be visually connected as illustrated in Fig. 6. Accordingly, a center of a holder can be easily recognized and the position of an abutment tooth model can be easily confirmed.

When the abutment tooth model is not positioned at a center part of the holder as a result of confirming the position in the horizontal direction as above, the abutment tooth model may be picked up by fingers so as to adjust the position after the cylindrical body 2 is removed from the abutment tooth model holding base 1. In addition, in a holder disclosed in Unexamined Japanese Patent Publication No. 2006-136729, although the position of an abutment tooth model in the horizontal direction can be adjusted by picking up tooth tip using fingertips, the abutment tooth model may be inclined, and thus it is hard to accurately adjust the position. However, in the holder according to the present invention, the cylindrical body 2 can be removed from the abutment tooth model holding base 1, and the residual ridge side of the abutment tooth model can be externally exposed. Thus, the position can be accurately adjusted by picking up the residual ridge side of the abutment tooth model by fingers.

In order to mount the holder holding the abutment tooth model on a rotating part of a three-dimensional coordinates measuring apparatus after adjusting the position of the abutment tooth model, the supporting shaft of the three-dimensional coordinates measuring apparatus is inserted into the holding hole 1b provided at the abutment tooth model holding base 1. However, in order to prevent idling of the abutment tooth model holding base 1 at the time of rotating the rotating part of the three-dimensional coordinates measuring apparatus to measure an external surface shape of the abutment tooth model, for example, a female screw is provided in the holding hole 1b provided in the abutment tooth model holding base 1, a male screw is provided at the supporting shaft of the three-dimensional coordinates measuring apparatus, and then, the supporting shaft of the three-dimensional coordinates measuring apparatus is screwed into the holding hole 1b of the abutment tooth model holding base 1 while rotating the abutment tooth model holding base 1. These screws are not illustrated in the drawings, although not illustrated.

When the supporting shaft is screwed into the holding hole 1b while rotating the abutment tooth model holding base 1, the position of an abutment tooth model held by the abutment tooth model holding base 1 may be shifted. Thus, it is preferable that the holding hole 1b provided at the abutment tooth model holding base 1 is a circular hole and the holder can be mounted by only inserting the supporting shaft of the three-dimensional coordinates measuring apparatus into the circular holding hole 1b. In order to realize such the case, the abutment tooth model holding base 1 may include the screw hole 1c provided from a side part thereof to the holding hole 1b, and the locking screw 1d is screwed into the screw hole 1c, as illustrated in Figs. 9 and 10. Accordingly, when the supporting shaft of the three-dimensional coordinates measuring apparatus inserted into the holding hole 1b is locked from the side direction by the locking screw 1d, the position of the abutment tooth model is not shifted, and thus the holder can be accurately fixed at the three-dimensional coordinates measuring apparatus.

Similarly, when the holding hole 1b provided at the abutment tooth model holding base 1 is a circular hole, the abutment tooth model holding base 1 may include the locking hole 1e provided at an end face of a lower side thereof in parallel with the holding hole 1b, as illustrated in Figs. 3 and 4. When a locking shaft projecting at the rotating part of the three-dimensional coordinates measuring apparatus in parallel with the supporting shaft is inserted into the locking hole 1e, the supporting shaft and the locking shaft of the three-dimensional coordinates measuring apparatus can be respectively inserted into the holding hole 1b and the locking hole 1e of the abutment tooth model holding base 1. Accordingly, the apparatus can be locked by two portions and fixed.

In addition, even when the holder according to the present invention is mounted on a three-dimensional coordinates measuring apparatus by the above-described process, the position of an abutment tooth model may be shifted. In such a case, the position of the abutment tooth model is necessarily adjusted again. However, as for the holder according to the present invention, the position of an abutment tooth model can be easily adjusted by only removing a cylindrical body even under the state that an operation is hard after mounting the holder on a three-dimensional coordinates apparatus.

## Claims

1. A holder of an abutment tooth model comprising;
an abutment tooth model holding base (1), which is formed in a pillar shape, has a concave part (1a) at the upper side thereof and a holding hole (1b) provided at a center of an end face of the lower side thereof for inserting a supporting shaft projecting at a center of a rotating part of a three-dimensional coordinates measuring apparatus, and can attachable/detachable hold the residual ridge side of an abutment tooth model by a sticky material (W) built on a bottom face (1aa) in the concave part (1a) thereof; and
a cylindrical body (2) which is formed in a cylindrical shape with a lower side thereof having a slightly larger inner diameter than an outer diameter of the abutment tooth model holding base (1) and being externally fitted to the abutment tooth model holding base (1), a stepped part (2a), which contacts to a part or the whole of an upper face of the abutment tooth model holding base (1), and an upper side from the stepped part (2a) having a smaller inner diameter than that of the lower side thereof.

2. The holder of an abutment tooth model as claimed in claim 1,
wherein the cylindrical body (2 ) has projecting parts (2b) having an approximate-triangular cross section at every 90° positions on an inner peripheral face of an end part at the upper side thereof.

3. The holder of an abutment tooth model as claimed in claim 1 or 2, wherein the holding hole (1b), is formed as a circular hole, and the abutment tooth model holding base (1) further comprises:
a screw hole (1c) provided from a side of the abutment tooth model holding base (1) toward the holding hole (1b) ; and
a locking screw (1d) screwed into the screw hole (1c) to lock a supporting shaft which projects at a center of a rotating part of a three-dimensional coordinates measuring apparatus and is inserted into the holding hole (1b).

4. The holder of an abutment tooth model as claimed in claim 1 or 2, wherein the holding hole (1b) is formed as a circular hole, and the abutment tooth model holding base (1) further comprises:
a locking hole (1e), in which a locking shaft projecting at the rotating part of a three-dimensional coordinates measuring apparatus in parallel with the supporting shaft is inserted, the locking hole (1e) being provided on an end face at a lower side of the abutment tooth model holding base (1).

5. The holder of an abutment tooth model as claimed in any one of claims 1 to 4, wherein the abutment tooth model holding base (1) further comprises:
a hole part (1f), in which a dowel pin inserted into the residual ridge side of an abutment tooth model is inserted, the hole part (1f) being provided on the bottom face (1aa) in the concave part (1a) of the abutment toothmodel holding base (1).

6. The holder of an abutment tooth model as claimed in any one of claims 1 to 5, wherein the abutment tooth model holding base (1) further comprises:
cutout parts (1g), which have a width capable of inserting a finger and are provided at a side part (1ab) of the concave part (1a) of the abutment tooth model holding base (1) along the peripheral direction at equal intervals, in parallel with an axis line of the abutment tooth model holding base (1).
